(19) Europäisches Patentamt

European Patent Office

Office européen des brevets

(11) Veröffentlichungsnummer: **0 209 741**

**A2**

(12) **EUROPÄISCHE PATENTANMELDUNG**

(21) Anmeldenummer: **86108557.9**

(22) Anmeldetag: **23.06.86**

(51) Int. Cl.⁴: **H 01 R 9/24**

(30) Priorität: **26.07.85 DE 8521662 U**

(43) Veröffentlichungstag der Anmeldung:
**28.01.87 Patentblatt 87/5**

(84) Benannte Vertragsstaaten:
**AT BE DE SE**

(71) Anmelder: **Siemens Aktiengesellschaft Berlin und
München
Wittelsbacherplatz 2
D-8000 München 2(DE)**

(72) Erfinder: **Dolansky, Franz
Buschingstrasse 41
D-8000 München 80(DE)**

(72) Erfinder: **Steiner, Ewald, Ing. (grad.)
Fichtenweg 11
D-8137 Berg 3(DE)**

(54) **Anschlussleiste für Telekommunikationsanlagen.**

(57) Die Anschlußleiste dient dem Anschluß von Leitungen unterschiedlicher Dicke und Beschaffenheit. Die Leiter von geringem Durchmesser werden an Schneidklemmen (2) angeschlossen, an die Schraubklemmen (3) für die Leiter mit sehr viel größerem Druchmesser angeschweißt sind.

FIG 3

Siemens Aktiengesellschaft          Unser Zeichen
Berlin und München                  VPA 85 P 1 4 8 2 E

Anschlußleiste für Telekommunikationsanlagen

Die Erfindung bezieht sich auf eine Anschlußleiste für Teilnehmerleitungen von Telekommunikationsanlagen. Eine derartige Anschlußleiste ist z.B. durch die DE-PS 33 11 459 bekannt geworden. Danach sind die ankommenden und abgehenden Teilnehmerleitungen an Doppelschneidklemmen angeschlossen. Die Schneidklemmen sind mit federnden Klemmbacken versehen, durch die es möglich ist, Leitungen mit unterschiedlichem Kerndurchmesser z.B. zwischen 0,4 und 0,7 mm anzuschließen. In Ländern mit einer geringen Dichte an Fernsprechteilnehmern ist es üblich, Freileitungen in Form von Stegleitungen vorzusehen, die gegenüber den vieladrigen Schaltkabeln einen mehr als doppelten Kerndurchmesser aufweisen. Da die Drähte eine hohe Zugfestigkeit und damit höhere Härte besitzen, kann eine solche Leitung nicht an dieselbe Schneidklemme angeschlossen werden, ohne diese zu beschädigen.

Der Erfindung liegt die Aufgabe zugrunde, eine Anschlußleiste zu schaffen, an die elektrische Leiter von sehr unterschiedlichem Durchmesser angeschlossen werden können. Diese Aufgabe wird durch die Erfindung gemäß Anspruch 1 gelöst. An die Schneidklemmen können die dünnen Leitungen ohne Abisolieren in einem einfachen Eindrückvorgang schnell und sicher angeschlossen werden. Die Leitungen mit großem Drahtdurchmesser werden hingegen an ihren Enden abisoliert und an der Schraubklemme befestigt. Derartige Schraubklemmen sind in der Lage, Leiter sehr unterschiedlichen und großen Durchmessers sicher zu befestigen. Die mit Doppelschneidklemmen bestückte Anschlußleiste ist vielseitig einsetzbar.

Khr 1 Gru / 17.07.1985

Nach einer Weiterbildung der Erfindung stehen die Schraubklemmen rechtwinkelig zu den Schneidklemmen ab und ragen
längsseitig aus der Anschlußleiste heraus. Dadurch ergeben
sich für die unterschiedlichen Leitertypen unterschiedliche
Anschlußseiten, so daß sie sich beim Anschließen nicht gegenseitig behindern.

Nach einer anderen Weiterbildung der Erfindung ist jede
Schraubklemme von einem erkerartig vorstehenden Gehäuseteil der Anschlußleiste teilweise umfaßt und sind zwischen den Gehäuseteilen Gassen für die an die Schneidklemme angeschlossenen Leite ausgespart ist. Es besteht
also für jede einzelne Klemme ein vorstehendes Gehäuseteil, das diese weitgehend umfaßt. Dadurch wird das Einsetzen der anzuchließenden Leiter erleichtert. Die Seitenwände des Gehäuseteiles können so hoch gezogen werden,
daß nicht nur die Schraubklemme selbst sondern auch ein
zu verwendender Schraubenzieher elektrisch geschützt und
geführt ist. Die zwischen den Gehäuseteilen freibleibenden Gassen dienen der Führung der an die Schneidklemmen
angeschlossenen Leiter. Dabei schützen die Seitenwände der
Gehäuseteile vor gegenseitiger Berührung.

Im folgenden wird die Erfindung anhand eines in der Zeichnung dargestellten Ausführungsbeispieles näher erläutert.

Es zeigen:
Fig. 1 eine Seitenansicht einer Anschlußleiste für Teilnehmerleitungen von Telekommunikationsanlagen,
Fig. 2 eine Draufsicht auf die Anschlußleiste nach Fig. 1
       mit angeschlossenen Teilnehmerleitungen und Sicherungselementen,
Fig. 3 eine Stirnansicht der Anschlußleiste nach Fig. 2,
Fig. 4 die Anordnung von Konktaktelementen der Anschlußleiste nach den Fig. 1 bis 3 mit Sicherungselementen und einem Erdblech.

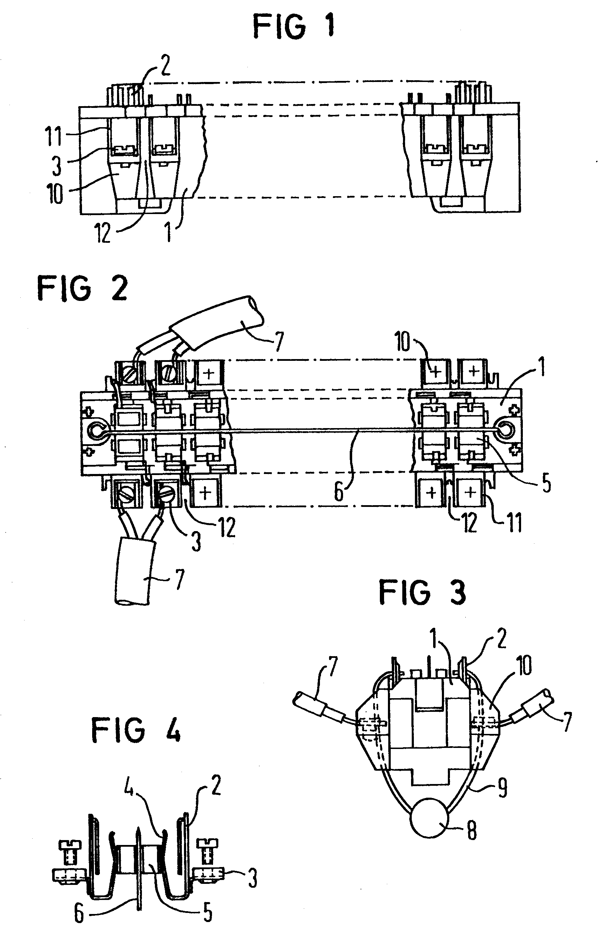

Nach den Fig. 1 bis 4 besteht eine Anschlußleiste aus einem Isolierstoffgehäuse 1, Kontaktelementen 2, 3, 4, Sicherungselementen 5 und einem Erdungsblech 6. Die in zwei Reihen angeordneten Kontaktelemente 2, 3, 4 bilden je eine Schneidklemme 2, eine Schraubklemme 3 und eine Kontaktfeder 4. Sie sind in zwei spiegelsymmetrischen Reihen im Gehäuse 1 der Anschlußleiste angeordnet. Die Schraubklemmen 3 sind an den Schneidklemmen 2 angeschweißt und stehen senkrecht zu diesen längsseitig aus dem Gehäuse 1 heraus. Die Schneidklemmen 2 sind mit den Kontaktfedern 4 einstückig verbunden. Diese bilden mit den Schneidklemmen 2 ein im wesentlichen U-förmig in sich zurückgebogenes Teil.

Die Kontaktfedern 4 liegen unter Spannung an den Sicherungselementen 5 an, die mit ihrem Gegenpol an dem sich in Längsrichtung der Anschlußleiste zentral erstreckenden Erdungsblech 6 anliegen. Bei den Sicherungselementen 5 handelt es sich z.B. um Überspannungsableiter. An die längsseitig an dem Isolierstoffgehäuse 1 angeordneten Schraubklemmen 3 sind Stegleitungen 7 von großem Kerndurchmesser und harter Isolation von den Seiten her herangeführt und angeschlossen. Ein mehradriges Schaltkabel 8 verläuft unterhalb der Anschlußleiste. Die einzelnen Adern 9 des Schaltkabels 8 sind über die Längsseiten der Anschlußleiste an die Schneidklemmen 2 herangeführt und angeschlossen. Dadurch sind die Adern des Schaltkabels 8 mit den Adern der Stegleitungen 7 elektrisch verbunden.

Die Schraubklemmen 3 sind teilweise von erkerartig vorstehenden Gehäuseteilen 10 umfaßt, die oberhalb der Schraubklemme 3 mit dünnen Seitenwänden 11 versehen sind. Zwischen den vorstehenden Gehäuseteilen 10 sind Gassen 12 freigelassen, in denen die an den Schneidklemmen 2 angeschlossenen Adern 9 des Schaltkabels 8 geführt sind.

3 Schutzansprüche

4 Figuren

## Patentansprüche

1. Anschlußleiste für Teilnehmerleitungen von Telekommunikationsanlagen, wobei an Kontaktelementen der Anschlußleiste Leiter unterschiedlicher Beschaffenheit anschließbar sind und wobei die Kontaktelemente mit Schneidklemmen für Leiter von geringem Durchmesser und weicher Isolation versehen sind,
d a d u r c h   g e k e n n z e i c h n e t ,
daß an die Kontaktelemente (2, 3, 4) Schraubklemmen (3) für Leiter (z.B. 7) mit sehr viel größerem Durchmesser und harter Isolation angeschweißt sind.

2. Anschlußleiste nach Anspruch 1,
d a d u r c h   g e k e n n z e i c h n e t ,
daß die Schraubklemmen (3) rechtwinkelig von den Schneidklemmen (2) abstehen und längsseitig aus einem Kunststoffgehäuse (1) der Anschlußleiste herausragen.

3. Anschlußleiste nach Anspruch 2,
d a d u r c h   g e k e n n z e i c h n e t ,
daß jede Schraubklemme (3) von einem einzelnen erkerartig vorstehenden Gehäuseteil (10) der Anschlußleiste teilweise umfaßt ist und daß zwischen den Gehäuseteilen (10) Gassen für die an die Schneidklemmen (2) angeschlossenen Leiter (z.B. 9) ausgespart sind.

1/1

# FIG 1

# FIG 2

# FIG 3

# FIG 4